# EUROPEAN PATENT SPECIFICATION

(11) **EP 3 317 568 B1**
(45) Date of publication and mention of the grant of the patent: **26.08.2020**
(21) Application number: 16736020.5
(22) Date of filing: 24.06.2016
(51) Int. Cl.: F16K 31/00, F02M 51/00, F02M 51/06, F02M 53/02, F02M 61/16

(54) **AN INJECTOR HAVING A SHAPE MEMORY SPRING**
INJEKTOR MIT EINER FORMGEDÄCHTNISFEDER
INJECTEUR COMPORTANT UN RESSORT À MÉMOIRE DE FORME

(30) Priority: 02.07.2015 TR 201508181
(43) Date of publication of application: 09.05.2018
(73) Proprietor: Robert Bosch GmbH, 70442 Stuttgart (DE)
(72) Inventor: KANDEMIR, Duygu, 1 A blok Daire 3 Nilüfer Bursa (TR)
(86) International application number: PCT/EP2016/064700
(87) International publication number: WO 2017/001302

(56) References cited:
- EP-A1- 1 169 591
- EP-A1- 1 647 703
- EP-A1- 1 760 796
- DE-A1- 10 223 025

## Description

### TECHNICAL FIELD

The present invention relates to a fuel injector for spraying fuel into the combustion chamber in internal combustion engines.

### PRIOR ART

The fuel injectors used in internal combustion engines can be produced in pluralities of different types. One of these types is the piezo injector. In piezo injectors, piezo ceramic materials are used inside the triggering mechanism which provides turning on/off valves.

Preloading shall be applied to piezo ceramic materials by means of a spring-like structure. In case the preloading is not applied with appropriate values, the ceramic material may be broken, and may lose its function. Due to mentioned technical problems, production becomes difficult and costs increase.

EP 1 647 703 A1 discloses a fuel injector with an actuator placed inside an actuator housing, the actuator being piezoelectric, magnetostrictive or made from a memory alloy.

As a result, because of all of the abovementioned problems, an improvement is required in the related technical field.

### BRIEF DESCRIPTION OF THE INVENTION

The present invention relates to a fuel injector, for eliminating the above mentioned disadvantages and for bringing new advantages to the related technical field.

The main object of the present invention is to provide a fuel injector whose production is facilitated.

Another object of the present invention is to provide a low-cost fuel injector.

In order to realize all of the abovementioned objects and the objects which are to be deducted from the detailed description below, the present invention is an injector having a triggering mechanism for spraying fuel, in order to be used in internal combustion engines. Accordingly, the present invention is characterized by comprising at least one chamber provided inside the injector, at least one heater for changing the temperature inside said chamber, at least one drive element provided inside the chamber, at least one drive arm connected to the drive element and which at least partially extends outwardly from the chamber, and at least one shape memory spring provided inside the chamber for providing movement of said drive arm in at least one first position and in at least one second position. Thus, when the temperature inside the chamber is increased by means of the heater, the form of the shape memory spring changes, and the position of the drive arm changes. The inner section of the chamber is at least partially full of fuel and there is at least one inlet valve and at least one outlet valve for providing input-output of the fuel into/out of the chamber.

In a preferred embodiment of the subject matter invention, there is at least one preload spring which exerts force to the drive element, where said force is in opposite direction with respect to the shape memory spring.

### BRIEF DESCRIPTION OF THE FIGURES

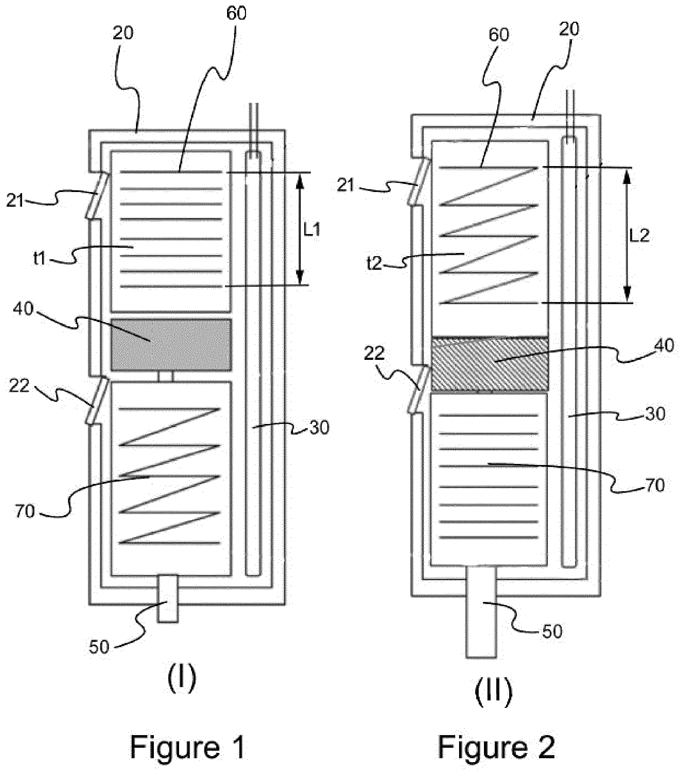

In Figure 1 and 2, the representative views of the triggering mechanism of the subject matter injector are given.

### REFERENCE NUMBERS

- 10: Triggering mechanism
- 20: Chamber
- 21: Inlet valve
- 22: Outlet valve
- 30: Heater
- 40: Drive element
- 50: Drive arm
- 60: Shape memory spring
- 70: Preload spring

### THE DETAILED DESCRIPTION OF THE INVENTION

In this detailed description, the subject matter fuel injector is explained with references to examples without forming any restrictive effect only in order to make the subject more understandable.

The subject matter fuel injector has a drive arm (50) for providing turning on/off the valves which provide fuel transfer. Said drive arm (50) moves between a first position (I) and a second position (II). The drive arm (50) moves under the control of a triggering mechanism (10).

Said triggering mechanism (10) has at least one chamber (20). The drive arm (50) extends outwardly from said chamber (20). There is at least one drive element (40) provided in the vicinity of the end of the drive arm (50) which exists inside the chamber (20). There is at least one preload spring (70) provided on the side of the drive element (40) where the drive arm (50) is provided. On the other side of the drive element (40), there is at least one shape memory spring (60). Said shape memory spring is made of materials defined as shape memory alloy in the related art.

Moreover, at least one heater (30) is provided inside the chamber (20). Besides, on the chamber (20), there is at least one inlet valve (21) provided in the vicinity of the side where the shape memory spring (60) is provided. On the chamber (20), there is at least one outlet valve (22) provided in the vicinity of the side where the preload spring (70) is provided. The inner section of the chamber (20) is full of fuel.

As can be seen in Figure 1, at a first position (I) of the triggering mechanism (10), the drive arm (50) stays inside the chamber (20) as much as possible. In this case, the preload spring (70) presses the drive element (40) towards the shape memory spring (60). Moreover, the fuel, provided inside the chamber (20), has a first temperature (t1) which is close to the operating temperature of the injector. The shape memory spring (60) has a first length (L1) at said first temperature (t1).

In order for the triggering mechanism (10) to reach the second position (II), illustrated in Figure 2, for fulfilling the function thereof, first of all, the temperature of the fuel inside the chamber (20) is raised by means of the heater (30) to a second temperature (t2) which is higher than the first temperature (t1). As the temperature of the fuel raises, the shape memory spring (60) obtains a second length (L2) which is bigger than the first length (L1). As the length of the shape memory spring (60) is increased, the drive element (40) is moved. Moreover, meanwhile, a force is obtained which is bigger than the spring force of the preload spring (70), and the preload spring (70) is compressed. Thus, the drive element (40) moves inside the chamber (20), and the section of the drive arm (50) existing outside of the chamber (20) also moves, and thereby triggering is realized.

After the triggering process is completed, in order for the triggering mechanism (10) to return to the first position (I), first of all, the heater (30) is turned off, and afterwards, the inlet valve (21) is turned on, and fuel entry into the chamber (20) is provided. At the same time, the outlet valve (22) is also turned on, and the hot fuel, provided inside the chamber (20), exits the chamber (20). Thus, the temperature inside the chamber (20) decreases. As the temperature inside the chamber (20) decreases, the shape memory spring (60) returns to the first length (L1). Since the force, exerted by the shape memory spring (60) to the drive element (40), decreases, the preload spring (70) brings the drive element (40) to the first position (I) and thus brings the drive arm (50) to the first position (I).

In an alternative embodiment of the present invention, the shape memory spring (60) and the preload spring (70) may be positioned in inverse manner. Accordingly, when the temperature inside the chamber (20) is increased, it becomes possible for the drive arm (50) to reach the first position (I), and when the temperature inside the chamber (20) is decreased, it becomes possible for the drive arm (50) to reach the second position (II).

By means of the subject matter injector, an embodiment is obtained which is more resistant to impacts, vibrations and ambient temperature. Moreover, injector production is facilitated. Moreover, an injector having a longer usage lifetime is obtained which is more environment-friendly. Besides, the shape memory spring (60), used inside the triggering mechanism (10) provided inside the injector, can be recycled and used again.

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. An injector having a triggering mechanism (10) for spraying fuel, in order to be used in internal combustion engines, comprising at least one chamber (20) provided inside the injector, at least one drive element (40) provided inside the chamber (20), at least one drive arm (50) connected to the drive element (40) and which at least partially extends outwardly from the chamber (20), and at least one shape memory spring (60) provided inside the chamber (20) for providing movement of said drive arm (50) in at least one first position (I) and in at least one second position (II), **characterized in that** the inner section of the chamber (20) is at least partially full of fuel and at least one heater (30) for changing the temperature is placed inside said chamber (20), and the chamber (20) comprises at least one inlet valve (21) and at least one outlet valve (22) for providing input-output of the fuel into/out of the chamber (20).

2. An injector according to claim 1, **characterized by** comprising at least one preload spring (70) which exerts force to the drive element (40), where said force is in opposite direction with respect to the shape memory spring (60).

## Patentansprüche

1. Einspritzventil mit einem Auslösemechanismus (10) zum Versprühen von Kraftstoff zur Verwendung bei Verbrennungsmotoren, das mindestens eine Kammer (20), die in dem Einspritzventil vorgesehen ist, mindestens ein Antriebselement (40), das in der Kammer (20) vorgesehen ist, mindestens einen Antriebsarm (50), der mit dem Antriebselement (40) verbunden ist und der sich zumindest zum Teil von der Kammer (20) nach außen erstreckt, und mindestens eine Formgedächtnisfeder (60), die dahingehend in der Kammer (20) vorgesehen ist, für eine Bewegung des Antriebsarms (50) in mindestens einer ersten Stellung (I) und in mindestens einer zweiten Stellung (II) zu sorgen, umfasst, **dadurch gekennzeichnet, dass** der innere Bereich der Kammer (20) zumindest zum Teil mit Kraftstoff gefüllt ist und mindestens eine Heizvorrichtung (30) zur Änderung der Temperatur in der Kammer (20) platziert ist und die Kammer (20) mindestens ein Einlassventil (21) und mindestens ein Auslassventil (22) zur Bereitstellung eines Kraftstoffeingangs bzw. -ausgangs in die bzw. aus der Kammer (20) umfasst.

2. Einspritzventil nach Anspruch 1, **dadurch gekennzeichnet, dass** es mindestens eine Vorspannfeder (70) umfasst, die Kraft auf das Antriebselement (40) ausübt, wobei die Kraft bezüglich der Formgedächtnisfeder (60) entgegengesetzt gerichtet ist.

## Revendications

1. Injecteur ayant un mécanisme de déclenchement (10) pour pulvériser du carburant, destiné à être utilisé dans des moteurs à combustion interne, comprenant au moins une chambre (20) prévue à l'intérieur de l'injecteur, au moins un élément d'entraînement (40) prévu à l'intérieur de la chambre (20), au moins un bras d'entraînement (50) connecté à l'élément d'entraînement (40) et qui s'étend au moins en partie à l'extérieur de la chambre (20), et au moins un ressort à mémoire de forme (60) prévu à l'intérieur de la chambre (20) pour assurer le mouvement dudit bras d'entraînement (50) dans au moins une première position (I) et dans au moins une deuxième position (II), **caractérisé en ce que** la section intérieure de la chambre (20) est au moins en partie remplie de carburant et au moins un dispositif de chauffage (30) pour faire varier la température est placé à l'intérieur de ladite chambre (20), et la chambre (20) comprend au moins une soupape d'entrée (21) et au moins une soupape de sortie (22) pour fournir une entrée-sortie du carburant dans/hors de la chambre (20).

2. Injecteur selon la revendication 1, **caractérisé en ce qu'**il comprend au moins un ressort de précontrainte (70) qui exerce une force sur l'élément d'entraînement (40), ladite force s'exerçant dans la direction opposée par rapport au ressort à mémoire de forme (60).
